# EUROPÄISCHE PATENTSCHRIFT

(11) **EP 0 783 056 B1**
(45) Veröffentlichungstag und Bekanntmachung des Hinweises auf die Patenterteilung: **21.11.2001**
(21) Anmeldenummer: 96810006.5
(22) Anmeldetag: 08.01.1996
(51) Int. Cl.: E02B 7/20, G01F 1/52

(54) **Vorrichtung zum steuerbaren Teilen eines zulaufenden Flüssigkeitsstroms**
Device for dividing with control an arriving fluid flow
Dispositif pour divider de manière contrôlable le courant d'une arrivée de liquide

(43) Veröffentlichungstag der Anmeldung: 09.07.1997
(73) Patentinhaber: VA TECH WABAG Schweiz AG, 8401 Winterthur (CH)
(72) Erfinder: Schmidt, Rolf, D-35305 Grünberg-Queckborn (DE)
(74) Vertreter: VA TECH Patente GmbH

(56) Entgegenhaltungen:
- DE-A- 2 935 798
- DE-A- 4 016 115
- DE-A- 4 016 378
- DE-A- 4 104 451
- US-A- 3 087 335

## Beschreibung

Die Erfindung betrifft eine Vorrichtung zum steuerbaren Teilen eines zulaufenden Flüssigkeitsstroms. Sie bezieht sich auch auf eine Verwendung der Vorrichtung sowie auf ein Verfahren zum gesteuerten Teilen eines zulaufenden Flüssigkeitsstroms.

Schütze und Überfallwehre - im folgenden kurz Absperrorgane genannt - sind seit vielen Jahren in der Wasseraufbereitungs- und Abwasserbehandlungstechnik bekannt. Sie dienen in verschiedenen Ausführungsformen als Absperrarmaturen oder als Regelarmaturen in Kanälen, Rinnen, Beckeneinläufen und Beckenausläufen.

Werden die Absperrorgane als Regelarmaturen eingesetzt, so sind zusätzlich Volumenstrommessungen erforderlich. Der Volumenstrom kann beispielsweise durch Messen der Überstauhöhe vor einer definierten Überlaufschwelle mittels einer Ultraschallsonde bestimmt werden. Wird das Wasser in einer Rohrleitung gefasst, so lässt sich auch eine induktive Durchflussmessung vornehmen.

Aus der DE-A- 41 04 451 ist ein Regenüberlaufwerk bekannt, bei dem im Fall eines Starkregenereignisses ein Zulaufwasser mittels einer überlaufschwelle in zwei Teilströme unterteilt wird. Die abströmenden Wassermengen werden für beide Teilströme mit jeweils einer Messeinrichtung bestimmt.

Es ist Aufgabe der Erfindung, eine Vorrichtung zu schaffen, mit der sich auf einfache Weise ein Flüssigkeitsstrom in Teilströme mit vorgegebenen Durchflussraten unterteilen lässt. Diese Aufgabe ist mit der in Anspruch 1 definierten Vorrichtung lösbar.

Die Vorrichtung zum steuerbaren Teilen eines zulaufenden Flüssigkeitsstroms in mindestens zwei Teilströme umfasst ein gegen oben offenes Eintrittsgefäss, Austrittstellen für die Teilströme und mindestens ein kontinuierlich verstellbares Absperrorgan zwischen dem Eintrittsgefäss und den Austrittstellen. Das oder jedes Absperrorgan weist eine Überlaufkante für den jeweiligen Teilstrom auf. Das Eintrittsgefäss vor dem oder den Absperrorganen bildet ein Einzugsgebiet für den zulaufenden Flüssigkeitsstrom. In diesem Einzugsgebiet ist ein Niveau durch eine freie Flüssigkeitsoberfläche gegeben. Erfindungsgemäss ist das oder jedes Absperrorgan mit einer beweglichen Messeinrichtung verbunden ist, die unabhängig von der Einstellung des Absperrorgans in einem konstanten vertikalen Abstand zu einer horizontalen Ebene durch die Überlaufkante angeordnet ist. Mit dieser Messeinrichtung ist der entsprechende vertikale Abstand zwischen der Überlaufkante und dem genannten Flüssigkeitsniveau bestimmbar.

Dadurch, dass die Abstandsmessung mit einer Einrichtung durchgeführt wird, die in einer konstant bleibenden Distanz von der Überlaufkante angeordnet ist, wird immer die genaue Überstauhöhe ermittelt. Diese steht in einem einfachen funktionellen Zusammenhang mit dem Volumenstrom des abfliessenden Teilstroms. Ist der obere Rand der Überlaufkante eine horizontale Gerade, so ist der Volumenstrom angenähert proportional zur Überlaufhöhe. Die Überlaufkante kann auch beispielsweise gezahnt ausgebildet sein. In diesem Fall ist der funktionelle Zusammenhang etwas komplizierter. Dieser Zusammenhang kann beispielsweise experimentell bestimmt werden.

Die Ansprüche 2 und 3 beziehen sich auf erfindungsgemässe Vorrichtungen, bei denen das oder die Absperrorgane durch Schütze bzw. Überfallwehre gegeben sind. Die Ansprüche 4 bis 7 betreffen vorteilhafte Ausführungsformen dieser Vorrichtungen.

Die Erfindung umfasst gemäss Anspruch 8 auch Vorrichtungen, bei denen mindestens eine Austrittsstelle mit dem Eintrittsgefäss über eine Durchgangsstelle verbunden ist, die eine stationäre, d.h. nicht steuerbar verstellbare Überlaufkante aufweist. Liegt nur eine derartige Austrittsstelle vor und ist deren Überlaufkante ausreichend hoch angeordnet, so lässt sich der zugeordnete Teilstrom indirekt mittels der übrigen Austrittsstellen mit steuerbaren Absperrorganen einstellen. Liegen mehrere Austrittstellen mit stationären Überlaufkanten vor, so ist nur der gesamte Volumenstrom der zugeordneten Teilströme entsprechend steuerbar.

Anspruch 9 betrifft eine Verwendung der Vorrichtung gemäss der Erfindung in der Wasser/Abwassertechnik. Gegenstand der Ansprüche 10 und 11 ist ein Verfahren, das mit der erfindungsgemässen Vorrichtung durchführbar ist.

Nachfolgend wird die Erfindung anhand der Zeichnungen erläutert. Es zeigen:
- Fig. 1: eine erfindungsgemässe Vorrichtung mit Schützen als Absperrorgane,
- Fig. 2: die geometrische Beziehung zwischen den Höhen der Messeinrichtung, dem Flüssigkeitsniveau und der Überlaufkante für die Vorrichtung der Fig.1,
- Fig. 3: eine Messeinrichtung mit Druckmessdose für ein Überfallwehr und
- Fig. 4: ein handbetreibbares Überfallwehr einer erfindungsgemässen Vorrichtung.

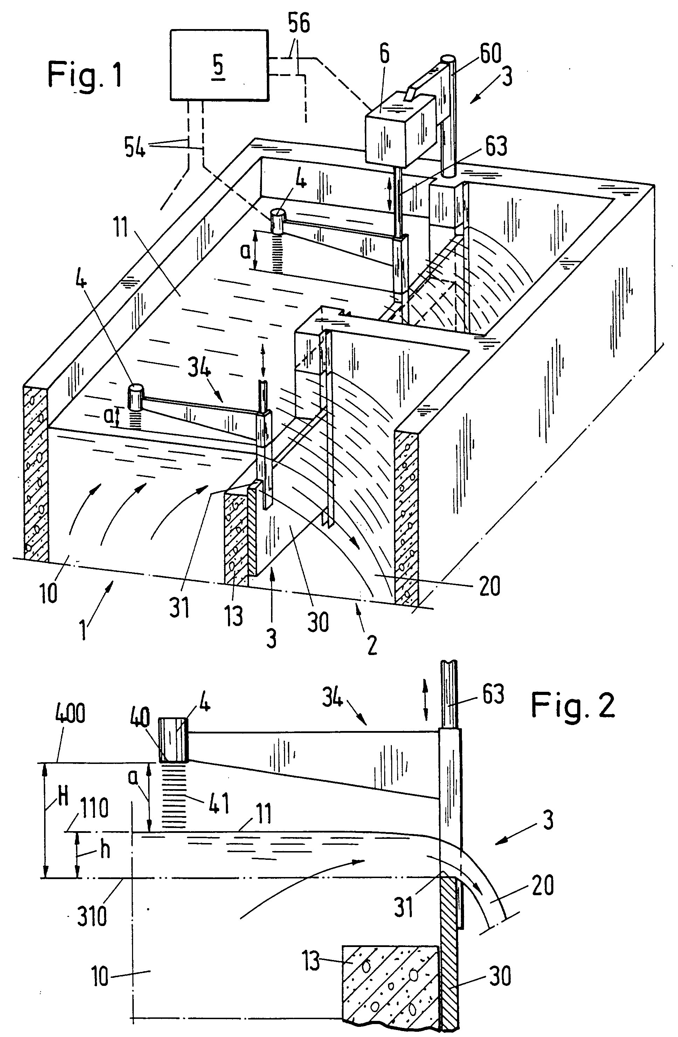

Das Schrägbild der Fig.1 zeigt eine Vorrichtung mit folgenden Komponenten: ein Eintrittsgefäss 1 für einen zulaufenden Flüssigkeitsstrom 10, der dort eine freie Oberfläche 11 aufweist und damit ein Flüssigkeitsniveau 110 definiert; zwei Austrittsstellen 2 für Teilströme 20, die durch eine Wand 13 mit Absperrorganen 3 von dem Eintrittsgefäss 1 getrennt sind, wobei die Absperrorgane 3 - hier Schützen - Überlaufkanten 31 und vertikal verschiebbare Platten 30 aufweisen; Messeinrichtungen 4 - hier Ultraschallsonden - mit denen die Überstauhöhen gemäss der Erfindung bestimmbar sind und die jeweils mittels eines Galgens 34 in einer konstant bleibenden Höhe über der Überlaufkante 31 angeordnet sind; eine Steuereinrichtung 5, die über Signalleitungen 54 mit den Messeinrichtungen 4 verbunden ist; an Ständern 60 befestigte Stellantriebe 6 (nur einer dargestellt), die über Leitungen 56 mit der Steuereinrichtung 5 verbunden sind und die mittels Spindeln 63 die Position der Platten 30 gesteuert einstellen können.

Mit der Sonde 4 - siehe Fig.2 - wird der Abstand a zwischen einem Punkt 40 und dem Flüssigkeitsniveau 110 mit einem Ultraschallstrahl 41 gemessen. Die horizontale Ebene 400 durch den Punkt 40 liegt in einer Höhe H über der horizontalen Ebene 310, in der die Überlaufkante 31 liegt. H ist eine vorgegebene Konstante. Die Überstauhöhe h, durch die der Volumenstrom des Teilstroms 20 festgelegt ist, ergibt sich einfach als Differenz zwischen der Konstanten H und der Messgrösse a.

Bei der in Fig.1 dargestellten Vorrichtung ist der Abstand a bei dem hinteren Absperrorgan 3 grösser als bei dem vorderen. Entsprechend ist der hintere Teilstrom 20 kleiner als der vordere.

Zwischen der Platte 30 und der Trennwand 13 ist eine nicht gezeigte Dichtung angeordnet, die einen unkontrollierten Durchtritt der Flüssigkeit durch das Absperrorgan 3 verhindert. Mit Vorteil wird die Überlaufkante 31 mit einem einstellbaren Blechstreifen - auch nicht gezeigt - gebildet, dessen Lage einstellbar ist. Der obere Rand des Blechstreifens ist mit Vorteil glatt; er kann aber auch beispielsweise gezahnt sein.

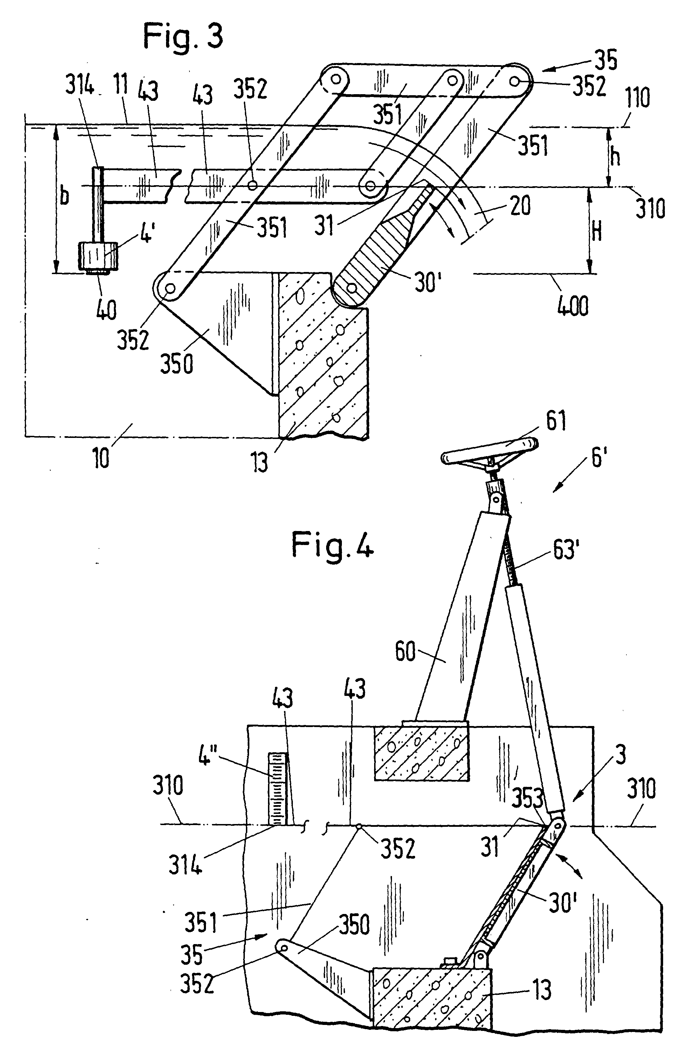

In Fig.3 ist eine Messeinrichtung 4' gezeigt, mit der die Überstauhöhe h hinter der verschwenkbaren Klappe 30' eines nicht näher dargestellten Überfallwehrs bestimmt werden kann. Im vorliegenden Fall ist die Messeinrichtung 4' eine Druckmessdose, mit welcher der Abstand b unterhalb des Flüssigkeitsniveaus 110 ermittelbar ist. Selbstverständlich könnte auch hier wie im ersten Beispiel eine über dem Flüssigkeitsniveau 110 angeordnete Ultraschallsonde vorgesehen sein, wie auch entsprechend im ersten Beispiel eine Druckmessdose vorgesehen sein kann. Die Druckmessung kann beispielsweise auch mit einem Einperlverfahren durchgeführt werden.

Die Sonde 4' ist über eine bewegliche Einrichtung 35 mit der Klappe 30' sowie einem raumfesten Element 350 verbunden. Mit dieser Einrichtung 35, die Glieder 351 und Gelenke 352 umfasst, wird zwischen der Sonde 4' und der Überlaufkante 31 eine konstante vertikale Distanz hergestellt, die nicht vom Neigungswinkel der Klappe 30' abhängt. Die Sonde 4' steht mit einem Punkt 314 einer horizontalen Stange 43, die ein Teil der Einrichtung 35 ist, in einer starren Verbindung 44. Der Punkt 314 liegt in der horizontalen, durch den oberen Rand der Überlaufkante 31 gehenden Ebene 310. Bei einer Änderung der Höhenlage der Überlaufkante 31 durch Verschwenken der Klappe 30' bewegt sich die Ebene 310 entsprechend mit. Die Stange 43 folgt horizontal bleibend dieser Bewegung; damit hat der Punkt 314 immer die gleiche Höhenlage wie die Überlaufkante 31.

Mittels der Druckmessdose 4' lässt sich die Höhe b der über dem Punkt 40 liegenden Flüssigkeitssäule bestimmen. Die Überstauhöhe h, nämlich der Abstand zwischen der Ebene 310 und dem Flüssigkeitsniveau 110, ergibt sich hier als Differenz zwischen b und H, wobei H der Abstand zwischen der Ebene 310 und der horizontalen Ebene 400 durch den Punkt 40 ist.

Bei dem Überfallwehr 3 der Fig.4 wird die Klappe 30' mittels einer handbetriebenen Einrichtung 6' (Spindel 63') eingestellt. Hier ist die horizontale Stange 43 mit einem Gelenk 353 verbunden, dessen Achse mit dem oberen Rand der Überlaufkante 31 zusammenfällt. Die Messeinrichtungen 4" ist ein Niveauanzeiger, der aus einem über dem Punkt 314 angeordneten vertikalen Stab mit einer Längenmessskala besteht und an dem der vertikale Abstand zwischen der Überlaufkante 31 und dem Flüssigkeitsniveau 110 (nicht gezeigt) ablesbar ist.

Anstelle des Handrads 61 kann auch wie beim ersten Beispiel ein Stellmotor vorgesehen sein. Ebenso kann der Niveauanzeiger 4" durch eine Ultraschallsonde oder eine Druckmessdose ersetzt werden.

Beim Betreiben der erfindungsgemässen Vorrichtung werden mittels der Sonden 4 und der Steuereinrichtung 5 Istwerte h' (= H-a bzw. b-H) für die Überstauhöhen h bestimmt. Durch gesteuertes Verstellen der oder einzelner Absperrorgane 3 werden die Überstauhöhen h gemäss vorgegebener Sollwerte h*, die einer gewünschten Aufteilung des zulaufenden Flüssigkeitsstroms 10 entsprechen, eingestellt. In der Steuereinrichtung 5 kommt dabei eine Logikschaltung zum Einsatz, die mit eingegebenen Daten für die Sollwerte h*, Messsignalen der Sonden 4 und einem abgespeicherten funktionellen Zusammenhang zwischen Überstauhöhe h und Volumenstrom Steuersignale für die Stellantriebe 6 erzeugt.

Für die Verteilung auf Teilströme 20 kommt es nur auf die relativen Höhenlagen der einzelnen Überlaufkanten 31 an. Daher ist es zweckmässig, wenn zuerst bei dem Absperrorgan 3, für das der grösste Teilstroms vorgesehen ist, die Überlaufkante 31 auf die tiefste Höhenlage gebracht wird und anschliessend nur noch die Höhenlagen der anderen Absperrorgane verändert werden.

Die Erfindung umfasst auch Vorrichtungen, bei denen mindestens eine Austrittsstelle mit dem Eintrittsgefäss über eine Durchgangsstelle verbunden ist, die eine stationäre Überlaufkante aufweist. Für eine derartige Vorrichtung liegt keine Abbildung vor.

## Patentansprüche

1. Vorrichtung zum steuerbaren Teilen eines zulaufenden Flüssigkeitsstroms in mindestens zwei Teilströme, welche Vorrichtung ein gegen oben offenes Eintrittsgefäss (1), Austrittstellen (2) für die Teilströme und mindestens eine Austrittstelle mit einem kontinuierlich verstellbaren Absperrorgan (3) umfasst, wobei das oder jedes Absperrorgan eine Überlaufkante (31) für den zugeordneten Teilstrom aufweist, das Eintrittsgefäss vor dem oder den Absperrorganen ein Einzugsgebiet für den zulaufenden Flüssigkeitsstrom bildet, in welchem ein Niveau (110) durch eine freie Flüssigkeitsoberfläche (11) gegeben ist, und das oder jedes Absperrorgan mit einer beweglichen Messeinrichtung (4, 4', 4") verbunden ist, die unabhängig von der Einstellung des Absperrorgans in einem konstanten vertikalen Abstand (H) zu einer horizontalen Ebene (310) durch die Überlaufkante (31) angeordnet ist und mit welcher Messeinrichtung (4, 4', 4") der entsprechende vertikale Abstand (h) zwischen der Überlaufkante (31) und dem Flüssigkeitsniveau (110) bestimmbar ist.

2. Vorrichtung nach Anspruch 1, **gekennzeichnet durch** mindestens ein Absperrorgan (3) in Form eines Schützen mit vertikal verschiebbarer Platte (30) und mit einer zugeordneten Messeinrichtung (4), die starr mit der Platte verbunden ist.

3. Vorrichtung nach Anspruch 1, **gekennzeichnet durch** mindestens ein Absperrorgan (3) in Form eines Überfallwehres mit verschwenkbarer Klappe (30'), wobei die zugeordnete Messeinrichtung (4, 4', 4") über eine bewegliche Einrichtung (35) mit der Klappe verbunden ist, mindestens ein auszeichenbarer Punkt (314) dieser Einrichtung unabhängig von der Lage der Klappe in der horizontalen Ebene (310) **durch** die Überlaufkante (31) liegt und dieser Punkt (314) Teil der Messeinrichtung ist oder mit dieser starr verbunden ist.

4. Vorrichtung nach einem der Ansprüche 1 bis 3, **dadurch gekennzeichnet, dass** die Messeinrichtung (4) eine Sonde ist, die über oder unter der freien Flüssigkeitsoberfläche (11) im Eintrittsgefäss angeordnet ist und dass mit dieser Sonde jeweils der Abstand (a; b) zwischen einem vorgegebenen Punkt (40) der Sonde und dem Flüssigkeitsniveau (110) messbar ist, wobei ein mit der Sonde erzeugtes Messsignal zur Steuerung der Höhenlage der Überlaufkante (31) verwendet wird.

5. Vorrichtung nach Anspruch 4, **dadurch gekennzeichnet, dass** die Messeinrichtung eine Ultraschallsonde (4) ist, die über dem Flüssigkeitsniveau (110) angeordnet ist.

6. Vorrichtung nach Anspruch 4, **dadurch gekennzeichnet, dass** die Messeinrichtung eine Druckmessdose (4') ist, die unter dem Flüssigkeitsniveau (110) angeordnet ist.

7. Vorrichtung nach einem der Ansprüche 1 bis 3, **dadurch gekennzeichnet, dass** die Messeinrichtung ein vertikaler Stab (4") mit einer Längenmessskala ist, die als Niveauanzeiger im Eintrittsgefäss (1) angeordnet ist und an welcher der Abstand zwischen der Überlaufkante (31) und dem Flüssigkeitsniveau (110) ablesbar ist.

8. Vorrichtung nach einem der Ansprüche 1 bis 7, **dadurch gekennzeichnet, dass** mindestens eine Austrittsstelle mit dem Eintrittsgefäss über eine Durchgangsstelle verbunden ist, die eine stationäre Überlaufkante aufweist.

9. Verwendung einer Vorrichtung gemäss einem der Ansprüche 1 bis 8 zur Verteilung eines Wasserstroms (10) in einer Wasseraufbereitungs- oder Abwasserbehandlungsanlage.

10. Verfahren zum gesteuerten Teilen eines zulaufenden Flüssigkeitsstroms (10) in mindestens zwei Teilströme (20) mittels mindestens einem kontinuierlich verstellbaren Absperrorgan (3), das eine Überlaufkante (31) für den zugeordneten Teilstrom umfasst, wobei der zulaufende Flüssigkeitsstrom in einem Einzugsgebiet des Absperrorgans eine freie Flüssigkeitsoberfläche (11) aufweist und dadurch ein Niveau (110) festlegt, und dass mittels einer dem Absperrorgan zugeordneten Sonde (4, 4', 4") und einer Steuereinrichtung (5) ein Istwert (h') für die Überstauhöhe (h) bestimmt wird und dass durch gesteuertes Verstellen der oder einzelner Absperrorgane die Höhenlagen gemäss vorgegebenen Sollwerten (h*), die einer gewünschten Aufteilung des zulaufenden Flüssigkeitsstroms entsprechen, eingestellt werden, wobei die oder jede Sonde mit dem zugeordneten Absperrorgan solcherart verbunden ist, dass unabhängig von der Einstellung des Absperrorgans die Sonde in einem konstanten vertikalen Abstand (H) zu einer horizontalen Ebene (310) durch die Überlaufkante angeordnet ist.

11. Verfahren nach Anspruch 10, **dadurch gekennzeichnet, dass** mindestens zwei steuerbare Absperrorgane (3) vorliegen und dass zuerst bei dem Absperrorgan, für das der grösste Teilstroms (20) vorgesehen ist, die Überlaufkante (31) auf die tiefste Höhenlage gebracht wird, und dass anschliessend nur noch die Höhenlagen der anderen Absperrorgane verändert werden.

## Claims

1. Apparatus for the controllable division of an incoming liquid flow (10) into at least two partial flows (20), which apparatus comprises an upwardly open inlet vessel (1), outlet places (2) for the partial flows and at least one outlet place with a continuously adjustable blocking member (3), wherein the or each blocking member has an overflow edge (31) for the associated partial flow, wherein the inlet vessel forms a catchment region for the incoming liquid flow before the blocking member or members in which liquid flow a level (110) is specified by a free liquid surface (11), and wherein the or each blocking member is connected to a movable measuring device (4, 4', 4") which is independently of the positioning of the blocking member placed at a constant vertical distance (H) to a horizontal plane (310) through the overflow edge (31) and wherein by means of the measuring device (4, 4', 4") the corresponding vertical distance (h) between the overflow edge (31) and the liquid level (110) can be determined.

2. Apparatus in accordance with claim 1 **characterised by** at least one blocking member (3) in the form of a shutter with a vertically displaceable plate (30) and with an associated measuring device (4) which is rigidly connected to the plate.

3. Apparatus in accordance with claim 1 **characterised by** at least one blocking member (3) in the form of an overflow weir with a pivotable flap (30'), with the associated measurement device (4, 4', 4") being connected to the flap via a movable arrangement (35), with at least one designatable point (314) of this arrangement lying in the horizontal plane (310) through the overflow edge (31) independently of the position of the flap, and with this point (314) being a part of the measurement device or being rigidly connected to it.

4. Apparatus in accordance with one of the claims 1 to 3 **characterised in that** the measuring apparatus (4) is a probe which is placed above or below the free liquid surface (11) in the inlet vessel; and **in that** in each case the distance (a; b) between a prespecified point (40) of the probe and the liquid level (110) can be measured by this probe, with a measuring signal produced by the probe being used for controlling the height of the overflow edge (31).

5. Apparatus in accordance with claim 4 **characterised in that** the measuring device is an ultrasonic probe (4) which is mounted above the level of the liquid (110).

6. Apparatus in accordance with claim 4 **characterised in that** the measuring apparatus is a pressure measuring cell (4') which is mounted below the level of the liquid (110).

7. Apparatus in accordance with one of the claims 1 to 3 **characterised in that** the measuring apparatus is a vertical rod (4") with a length measuring scale which is mounted in the inlet vessel (1) as a level indicator and from which the distance between the overflow edge (31) and the liquid level (110) can be read off.

8. Apparatus in accordance with one of the claims 1 to 7 **characterised in that** at least one outlet place is connected with the inlet vessel via a passage place which has a stationary overflow edge.

9. Use of an apparatus in accordance with one of the claims 1 to 8 for distributing a water flow (10) in a water processing plant or sewage treatment plant.

10. Method for the controlled division of an incoming liquid flow (10) into at least two partial flows (20) by means of a continuously adjustable blocking member (3) which comprises an overflow edge (31) for the associated partial flow, with the incoming liquid flow having a free surface (11) and thus defining a level (110) in a catchment region of the blocking member,
**characterised in that** an actual value (h') of the overflow height (h) is determined by means of a probe (9) associated with the blocking member and of a control device (5); and **in that** the heights are adjusted in accordance with preset desired values (h*) corresponding to a desired division of the incoming liquid flow by controlled adjustment of the blocking member or of the individual blocking members, with the or each probe being connected to the associated blocking member in such a manner that the probe is mounted at a constant vertical distance (H) from a horizontal plane (310) through the overflow edge independent of the setting of the blocking member.

11. Method in accordance with claim 10 **characterised in that** at least two controllable blocking members (3) are present; and **in that** the overflow edge (31) of the blocking member provided for the greatest partial flow (20) is first brought to the lowest height; and **in that** subsequently only the heights of the other blocking members are changed.

## Revendications

1. Dispositif pour diviser, de façon susceptible d'être commandée, une arrivée de liquide en au moins deux courants partiels, le dispositif comprenant un récipient d'entrée (1) ouvert vers le haut, des points de sortie (2) pour les courants partiels et au moins un point de sortie équipé d'un organe d'isolement (3) réglable de façon continue, le ou chaque organe d'isolement présentant une bordure de déversement (31) pour le courant partiel associé, le récipient d'entrée formant, avant le ou les organes d'isolement, une zone d'introduction de l'arrivée de liquide, dans laquelle un niveau (110) est constitué par une surface libre de liquide (11), et le ou chaque organe d'isolement est relié à un dispositif de mesure (4,4',4") mobile, disposé indépendamment du réglage de l'organe d'isolement sous un espacement vertical (H) constant par rapport à un plan horizontal (310) passant par la bordure de déversement (31), et dispositif de mesure ((4,4',4") à l'aide duquel l'espacement vertical (h) correspondant, entre la bordure de déversement (31) et le niveau de liquide (10), est susceptible d'être déterminé.

2. Dispositif suivant la revendication 1, **caractérisé par** au moins un organe d'isolement (3) réalisé sous la forme d'un tablier de vanne équipé d'une plaque (30) déplaçable verticalement et avec un dispositif de mesure (4) associé, relié rigidement à la plaque.

3. Dispositif suivant la revendication 1, **caractérisé par** au moins un organe d'isolement (3) réalisé sous la forme d'un barrage submersible ou déversoir, muni d'un volet (30') pivotant, le dispositif de mesure (4,4',4") associé, étant relié au volet, par un élément mobile (35), au moins un point (314), susceptible d'être affiché, de cet élément étant situé dans le plan horizontal (310) passant par la bordure de déversement (31), indépendamment de la position du volet, et ce point (314) faisant partie du dispositif de mesure ou bien étant relié rigidement à celui-ci.

4. Dispositif suivant l'une des revendications 1 à 3, **caractérisé en ce que** le dispositif de mesure (4) est une sonde disposée au-dessus ou au-dessous de la surface libre de liquide (11) dans le récipient d'entrée, et **en ce que**, avec cette sonde, chaque fois l'espacement (a;b), entre un point (40) prédéterminé de la sonde et le niveau de liquide (110), est susceptible d'être mesuré, un signal de mesure généré avec la sonde étant utilisé pour commander la position en hauteur de la bordure de déversement (31).

5. Dispositif selon la revendication 4, **caractérisé en ce que** le dispositif de mesure est une sonde à ultrasons (4) disposée au-dessus du niveau de liquide (110).

6. Dispositif selon la revendication 4, **caractérisé en ce que** le dispositif de mesure est une capsule ou boîte dynamométrique (4'), disposée au-dessous du niveau de liquide (110).

7. Dispositif selon l'une des revendications 1 à 3, **caractérisé en ce que** le dispositif de mesure est une barre verticale (4") portant une échelle de mesure de longueur, disposée dans le récipient d'entrée (1), à titre d'indicateur de niveau, et sur lequel l'espacement, entre la bordure de déversement (31) et le niveau de liquide (110), peut être lu.

8. Dispositif selon l'une des revendications 1 à 7, **caractérisé en ce qu'**au moins un point de sortie est relié au récipient d'entrée par un point de passage, présentant une bordure de déversement sationnaire.

9. Utilisation d'un dispositif selon l'une des revendications 1 à 8, pour la répartition d'un écoulement d'eau (10) dans une installation de préparation d'eau ou de traitement des eaux usées.

10. Procédé pour diviser, de façon susceptible d'être commandée, une arrivée de liquide (10) en au moins deux courants partiels, à l'aide d'au moins un organe d'isolement (3) susceptible d'être réglé de façon continue, qui comprend une bordure de déversement (31) pour le courant partiel associé, l'arrivée de liquide dans une zone d'entrée de l'organe d'isolement présentant une surface libre de liquide (11) et, de ce fait, fixant un niveau (110), et en ce qu'une valeur réelle (h') pour la hauteur d'accumuation (h) est déterminée au moyen d'une sonde (4,4',4") associée à l'organe d'isolement et d'un dispositif de commande (5), et en ce que les positions en hauteur sont réglées par une manoeuvre de réglage commandée des ou de certains organes d'isolement, d'après des valeurs de consigne (h*) prédéterminées, correspondant à une répartition souhaitée de l'arrivée de liquide, la ou chaque sonde étant reliée à l'organe d'isolement associé, d'une manière faisant que la sonde est disposée sous un espacement vertical (H) constant par rapport à un plan horizontal (310) en utilisant la bordure de déversement, indépendamment du réglage de l'organe d'isolement.

11. Procédé selon la revendication 10, **caractérisé en ce qu'**au moins deux organes d'isolement (3) susceptibles d'être commandés sont prévus et **en ce que**, d'abord, concernant l'organe d'isolement pour lequel est prévu le courant partiel (20) maximal, la bordure de déversement (31) est placée à la position en hauteur la plus basse, puis seules les positions en hauteur des autres organes d'isolement étant wencore modifiées.
